# FASCICULE DE BREVET EUROPEEN

(11) **EP 1 972 730 B1**
(45) Date de publication et mention de la délivrance du brevet: **27.06.2012**
(21) Numéro de dépôt: 08005460.4
(22) Date de dépôt: 25.03.2008
(51) Int. Cl.: F16B 2/24

(54) **Ligature métallique et son procédé de production**
Metalldrahtverbindung und ihr Herstellungsverfahren
Wire ligature and its method of production

(30) Priorité: 21.03.2007 FR 0702048
(43) Date de publication de la demande: 24.09.2008
(73) Titulaire: Acedo, Jean-Michel, 13770 Venelles (FR)
(72) Inventeur: Acedo, Jean-Michel, 13770 Venelles (FR)
(74) Mandataire: Hirsch & Associés

(56) Documents cités:
- DE-A1- 4 335 267
- GB-A- 453 612
- US-A- 3 038 224

## Description

La présente invention concerne l'assemblage de pièces de membrure de charpente. Le document GB 453 612 décrit une telle charpente.

Si l'on prend l'exemple d'une charpente en bois, les divers éléments forment une structure étagée de poutrelles dans laquelle les poutrelles supérieures sont en appui sur les autres. Pour assurer la pérennité de cet appui, il faut que le point de jonction soit stable, c'est-à-dire que l'extrémité de la poutrelle en appui ne glisse pas sur le tronçon correspondant de la poutrelle porteuse. A cette fin, on peut prévoir une encoche dans cette dernière. Toutefois, cela représente un affaiblissement de celle-ci.

On pourrait aussi songer à utiliser un embout métallique de jonction, formant une pluralité de manchons ayant chacun une direction d'extension particulière, pour recevoir des tronçons d'extrémité de poutrelles. Toutefois, une telle fabrication d'embouts ne pourrait, industriellement, offrir tous les angles voulus dans les divers montages possibles de poutrelles.

La présente invention vise à proposer une autre solution.

A cet effet, l'invention concerne tout d'abord une ligature de liaison entre deux éléments de membrure d'une ossature de construction, comprenant un fil métallique enroulé de façon à former un bobinage dont les spires entourent deux tronçons respectifs des deux éléments de membrure, une spire d'au moins une extrémité du bobinage étant soudée à une autre spire pour inhiber tout mouvement relatif entre elles.

La ligature permet donc de bloquer tout mouvement relatif entre les deux éléments de membrure. Comme le matériau de base est un fil, la ligature n'est pas de forme prédéfinie, mais, au contraire, elle s'adapte à la forme des éléments sur lesquels on la pose. En d'autres termes, l'invention consiste à utiliser un matériau déformable pour ensuite, par soudage, bloquer, au moins en extrémité, toute déformation de celui-ci s'il tend à se débobiner.

En particulier, à cet effet, il peut être prévu un cordon de soudure de verrouillage qui relie une pluralité de spires, avec, éventuellement, fonctionnellement en parallèle, au moins un autre dit cordon de soudure, situé dans un autre secteur angulaire de la périphérie de la ligature.

Un tronçon d'une autre extrémité du bobinage peut être immobilisé en étant fiché dans un trou ménagé dans l'un des deux éléments de membrure.

Si les membrures sont par exemple de section arrondie et placées côte à côte, leur profil transversal va former un 8, alors que celui de la ligature va former un 0. De ce fait, des tronçons intermédiaires des spires, en regard de l'étranglement à mi-hauteur du 8, vont se trouver hors de contact avec les éléments de membrure. En pareil cas, il est avantageux que les tronçons intermédiaires présentent une forme concave, de sorte que le profil ci-dessus en "0" est déformé pour se rapprocher de la forme en "8" des deux éléments de membrure, qui sont ainsi mieux tenus. En outre, le fait de forcer les tronçons intermédiaires à prendre la forme concave tend à supprimer toute surlongueur parasite due au fait que le fil, a priori provenant d'un rouleau de grande longueur, n'est pas totalement malléable, si bien que les tronçons intermédiaires conservent, lors de leur étirage d'un élément de membrure à l'autre, une certaine courbure, et précisément une certaine convexité. L'élasticité du fil risque alors de permettre un certain jeu en cas de forces externes tendant à écarter les deux éléments de membrure. La déformation en forme concave, par exemple par martelage, va en outre supprimer des contraintes internes du fil si celui-ci provient d'un rouleau.

La ligature est de préférence constituée à partir d'un fil à base de fer recuit.

Le fil présente avantageusement un diamètre compris entre 4 et 7 millimètres, ou une section correspondante si le fil n'est pas de section circulaire.

Au-dessous des 4 millimètres, les spires présenteraient une déformation essentiellement élastique, et auraient donc une forte tendance à se débobiner si la courbure qui leur est donnée est relativement faible, c'est-à-dire pour des rayons de courbure de la section des éléments de membrure dépassant quelques centimètres. Au-dessus des 4 millimètres de diamètre, la déformation par courbure du fil est essentiellement plastique, et donc les contraintes internes élastiques résiduelles sont moindres. Au-dessus des 7 millimètres, lé fil devient trop rigide pour former les spires à la main.

L'invention porte aussi sur un procédé d'établissement d'une ligature entre deux éléments de membrure, dans lequel:
on se procure du fil métallique,
on bobine le fil sur deux tronçons respectifs, à assembler, des deux éléments de membrure, et
on soude au moins une spire d'extrémité du bobinage ainsi obtenu à une autre spire.

On peut en particulier déposer un cordon de soudure reliant deux spires d'extrémités opposées du bobinage.

Si des tronçons intermédiaires des spires se trouvent hors de contact avec les éléments de membrure, on peut effectuer une déformation par écrasement d'au moins une partie centrale de ceux-ci, vers les dits éléments de membrure, pour que les tronçons intermédiaires présentent une forme concave.

Pour stabiliser la forme concave, on peut effectuer un recuit de la dite partie centrale.

On peut aussi stabiliser la dite déformation par ajout d'un cordon de soudure s'étendant sur la partie centrale.

L'invention porte enfin sur une charpente comportant au moins une ligature selon l'invention, et comportant une poutre constituée d'au moins un dit élément de membrure relié, en un point intermédiaire de sa longueur, à un autre élément de membrure par une dite ligature.

La charpente peut comporter une poutre constituée d'au moins deux éléments de membrure disposés sensiblement côte à côte et mutuellement reliés, en un point intermédiaire de leur longueur, par une dite ligature.

Deux dits bobinages, portés par deux éléments de membrure respectifs, peuvent être reliés par une entretoise soudée à ceux-ci par deux extrémités opposées.

L'invention sera mieux comprise à l'aide de la description d'une forme de réalisation d'une ligature, du procédé d'établissement de la ligature et d'une charpente comportant des ligatures, selon l'invention, en référence au dessin annexé, sur lequel :
- la figure 1 représente un premier élément de membrure sous forme de perche servant de poutre ou de poteau, prévue pour être fixée à une seconde perche de même forme, au moyen d'une ligature en fil métallique qui est à réaliser et dont on voit un tronçon d'extrémité,
- la figure 2 représente la ligature quasi terminée en ce qui concerne le nombre de spires,
- la figure 3 représente la ligature munie de deux cordons de soudure reliant chacun toutes les spires,
- la figure 4 montre une opération de martelage pour rendre concaves des tronçons intermédiaires, non supportés, entre les deux perches,
- la figure 5 montre un cordon de soudure déposé au fond de la concavité ainsi formée,
- la figure 6 montre un mât tripode, formé de trois perches reliées à différents niveaux par des ligatures,
- la figure 7 représente des entretoises en sommet du mât de la figure 6, et
- la figure 8 montre une charpente légère constituée par un treillis tridimensionnel de perches ou poutrelles reliées par des ligatures selon l'invention.

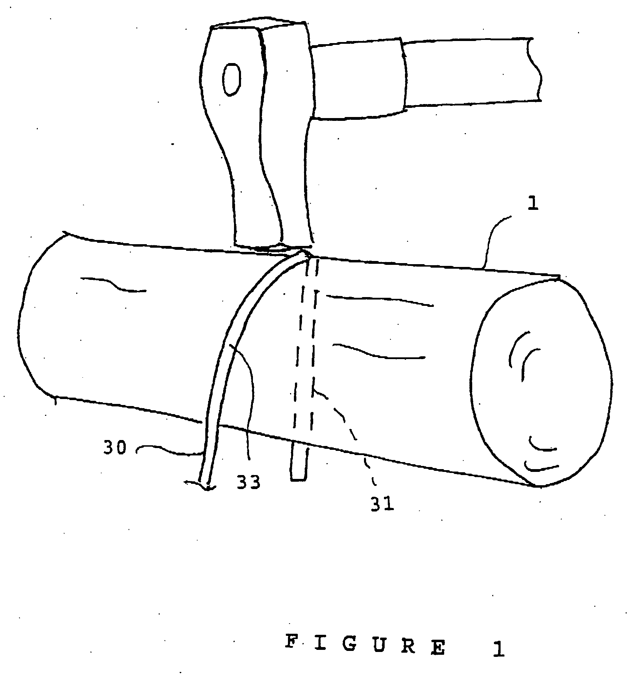

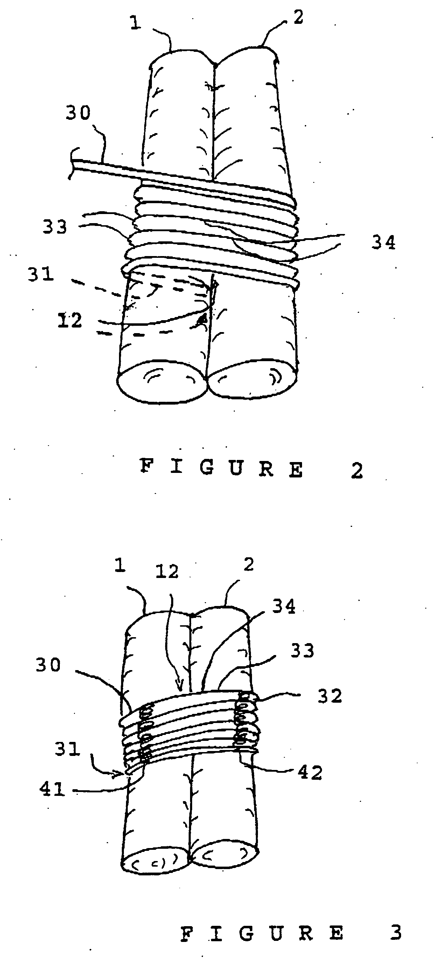

Les figures 1 à 5 illustrent une suite d'étapes d'élaboration d'une ligature selon l'invention, destinée à relier mutuellement deux perches 1, 2. Dans cet exemple, les perches 1, 2 sont disposées parallèlement côte à côte (figures 2-5) afin de constituer un pilier ou une poutre de résistance accrue en flexion. Les perches 1, 2 sont ici constituées de rondins de châtaigner d'environ 10 centimètres de diamètre, bois qui présente l'intérêt d'être imputrescible. Un fil métallique 30 présentant un diamètre de 6 millimètres, ici à base de fer recuit, sert à constituer les ligatures.

On comprendra toutefois que l'invention peut s'appliquer à tout type d'élément de construction, en bois, métal, plastique ou autre, présentant une section oui peut être autre que circulaire.

La figure 1 montre qu'un premier tronçon d'extrémité libre 31, rectiligne et ancré, du fil 30, a été enfilé dans un perçage sensiblement radial ménagé dans la perche 1, ceci afin de fixer la position du tronçon d'extrémité ancré 31. Au niveau du débouché du tronçon d'extrémité ancré 31 hors du perçage, côté opposé à son extrémité libre, le fil 30 est martelé pour amorcer la formation d'une première spire 33 partant perpendiculairement au tronçon d'extrémité ancrée 31, c'est-à-dire précisément selon une direction circonférentielle locale, pour ainsi être appliquée sur la surface de la perche 1.

La figure 2 montre une pluralité de spires 33 jointives constituant la ligature, qui emprisonne les perches 1 et 2. Le profil, en coupe radiale, des perches 1, 2 forme donc un "8", alors que le profil des spires 33 est en forme de "0", c'est-à-dire avec deux demi-cercles opposés, à fil 30 en appui sur la perche 1, respectivement 2, reliés par des tronçons intermédiaires 34 de fil 30 sensiblement rectilignes ou légèrement convexes du fait que le fil 30 provient d'un rouleau de fil. Les tronçons intermédiaires 34, hors de contact avec les perches 1, 2, délimitent avec celles-ci deux volumes opposés 12 à section radiale sensiblement triangulaire isocèle, dont deux côtés symétriques sont concaves du fait qu'ils sont définis par un secteur angulaire de la perche 1 ou 2, les tronçons intermédiaires 34 définissant la base.

La figure 3 montre que les spires 33 sont réunies par plusieurs cordons de soudure de verrouillage, à extension sensiblement axiale, dont deux cordons de verrouillage 41, 42, visibles sur la figure 3, sont situés chacun dans un secteur angulaire particulier des spires 33. Les deux spires 33 de chaque extrémité sont ainsi reliées à travers les autres.

On notera toutefois que, en configuration minimale, un second tronçon d'extrémité libre 32, formant la dernière spire 33 et opposé au premier tronçon 31, peut être soudé à l'avant-dernière spire 33, ou à toute autre. En effet, comme les spires 33 sont de profil non parfaitement circulaire, la rigidité du fil 30 empêche qu'elles se débobinent sous l'effet d'une force élastique de contrainte interne résiduelle ou d'une force externe tendant à écarter mutuellement les perches 1, 2.

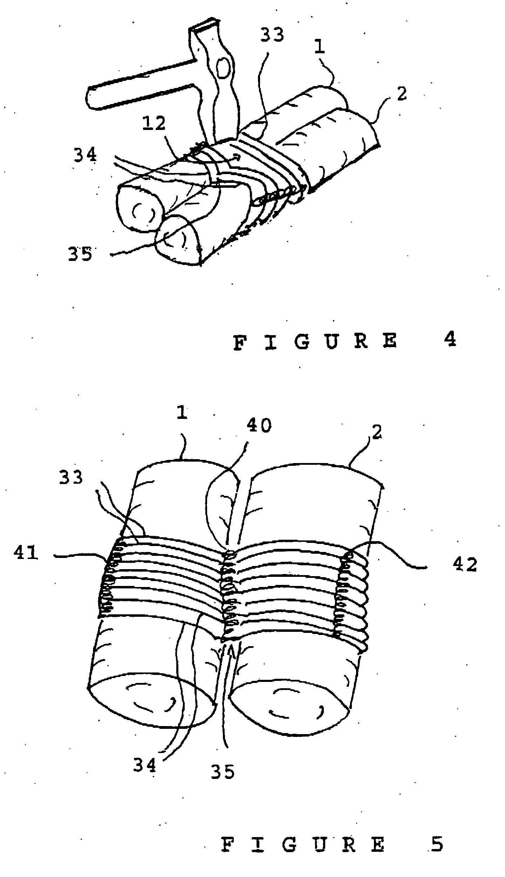

La figure 4 montre une opération de martelage radial des zones centrales respectives à mi-longueur des tronçons intermédiaires 34, visant à les rabattre vers les perches 1, 2, c'est-à-dire à écraser radialement les volumes 12, la base du triangle ci-dessus prenant alors un profil rentrant en V à branches arrondies. De la sorte, le profil initial en "0" ci-dessus des spires 33 tend à se rapprocher du profil en "8" des deux perches 1, 2, c'est-à-dire que le secteur angulaire de contact de chaque spire 33 avec le pourtour de la perche 1 ou 2 s'accroît au-delà des 180 degrés définis par le sommet ou la base du "0" formant le profil d'origine des spires 33.

Les perches 1, 2 sont ainsi étroitement plaquées l'une contre l'autre, puisque le martelage ci-dessus a supprimé le jeu radial résiduel entre les deux perches 1, 2, jeu lié au fait que les tronçons intermédiaires 34 n'étaient pas parfaitement rectilignes lors de leur pose. Un autre intérêt du martelage réside dans le fait que l'appui latéral entre les deux perches 1, 2 n'est plus nécessaire puisque les spires 33 forment un collier entourant chaque perche 1, 2 sur plus de 180 degrés, c'est-à-dire qu'elles ne peuvent plus se rapprocher mutuellement. On aurait donc pu prévoir que les deux perches 1, 2 soient séparées par un espace, par exemple pour former ensemble une poutre d'inertie ou moment de flexion accru.

La figure 5 montre que des zones à mi-longueur des tronçons intermédiaires 34 sont ensuite reliées par un cordon de soudure 40. Le cordon de soudure 40 a pour effet de combler une zone de fond 35 du V de martelage ci-dessus. La masse de matière rapportée forme une surépaisseur qui tend à figer l'angle du V, et s'oppose ainsi à toute force élastique subsistante qui tendrait à ouvrir l'angle du V, c'est-à-dire à faire remonter radialement la base du triangle vers sa forme rectiligne. De plus, l'élévation de température due au soudage effectue un recuit qui contribue à libérer les contraintes internes du fil 30 à la base 35 du V. Indépendamment du dépôt du cordon de soudure 40, il peut d'abord être prévu d'effectuer un recuit au chalumeau.

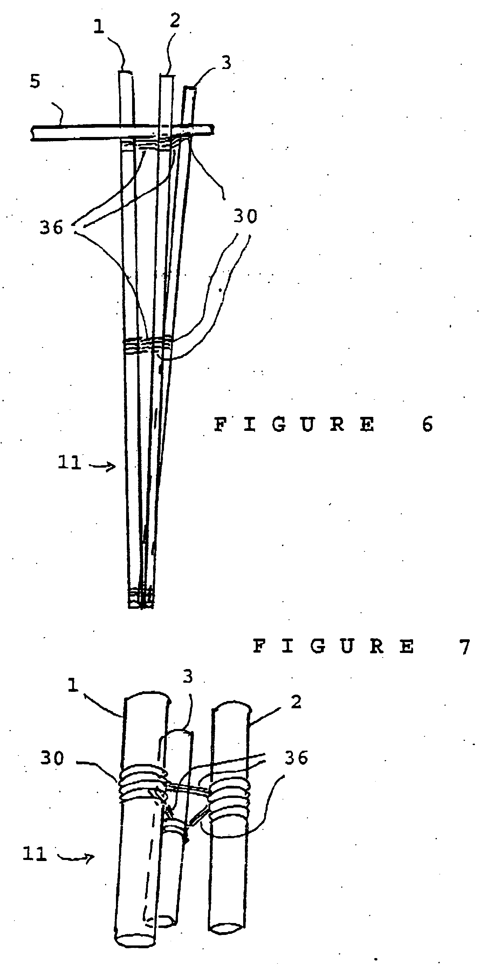

La figure 6 montre un pied ou poteau tripode 11, constitué de trois perches semblables 1, 2, 3 mutuellement fixées en trois endroits étagés. Les perches 1, 2, 3 sont ici montées de façon légèrement divergente pour accroître l'inertie globale en flexion. Ainsi, alors que des tronçons inférieurs des perches respectives 1, 2, 3 sont adjacents, des tronçons de niveau intermédiaire et de niveau supérieur sont mutuellement écartés et la rigidité du fil 30 peut empêcher leur rapprochement. Toutefois ici, un tronçon d'extrémité d'une poutre horizontale 5 a été glissé entre la perche 2 et lès perches 1, 3, de sorte que la poutre 5 sert d'entretoise.

Pour, si besoin est, bien assurer le blocage en rapprochement, il peut être prévu que chaque perche 1, 2, 3 soit totalement entourée par une ou plusieurs spires 33, le fil 30 passant ensuite à une autre des perches 1, 2, 3 pour recommencer de même. Entre les spires circulaires 33, le fil 30 forme ainsi des pédoncules radiaux rigides servant d'entretoises. Il peut toutefois être prévu que les perches 1, 2, 3 reçoivent des bobinages individuels qui seront ensuite reliés, deux à deux, par trois pédoncules horizontaux 36 formés de tiges métalliques soudées par leurs deux extrémités sur deux des bobinages ci-dessus, comme l'illustre la figure 7. Les pédoncules 36 supportent une ou plusieurs poutres horizontales 5.

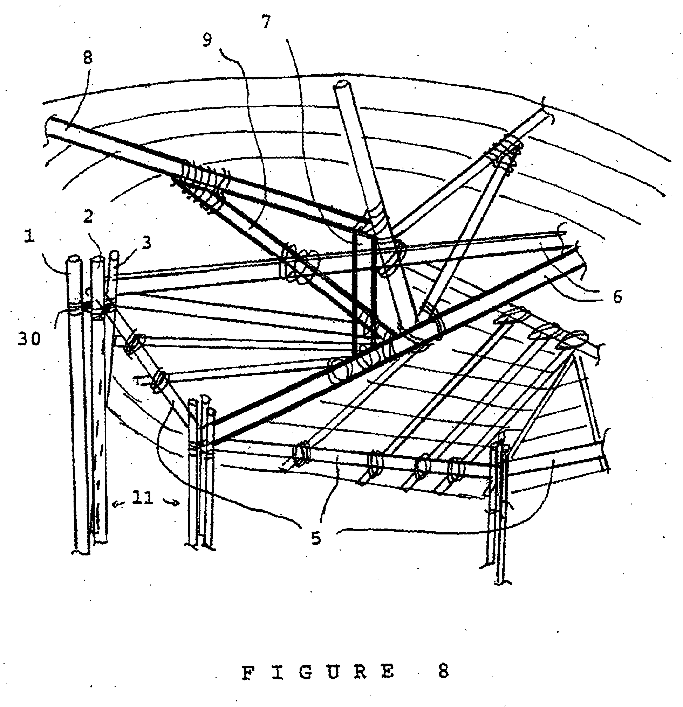

La figure 8 est une vue de dessous en perspective d'une charpente légère de toiture. La charpente comporte des fermes comportant des poutres maîtresses horizontales 6 portées par des poteaux tripodes 11 pour supporter un poteau sommital 7 dont une extrémité supérieure détermine un sommet de la charpente. Les poteaux tripodes 11 servent aussi d'appui pour une couronne de dites poutres horizontales 5, périphériques. Une extrémité supérieure d'une poutre oblique de toiture 8, parmi plusieurs autres, s'appuie latéralement sur le sommet du poteau 7, et une extrémité inférieure de celles-ci s'appuie sur l'une des poutres périphériques 5.

Une poutrelle horizontale 9, parmi plusieurs autres fixées par ligatures à deux poutres maîtresses 6 mutuellement écartées, sert d'étai de niveau intermédiaire pour la poutre oblique 8 considérée. On voit que l'extrémité correspondante de la poutrelle étai 9, taillée en biseau pour s'appliquer contre un côté inférieur de la poutre oblique de toiture 8, est fixée à celle-ci par une ligature, l'ensemble formant un v dont le tronçon de base est aligné avec l'une (8) des branches.

## Revendications

1. Ligature de liaison entre deux éléments de membrure (1, 2) d'une ossature de construction, comprenant un fil métallique (30) enroulé de façon à former un bobinage dont les spires (33) entourent deux tronçons respectifs des deux éléments (1, 2), **caractérisée en ce que** une spire (33) d'au moins une extrémité du bobinage est soudée à une autre spire (33) pour inhiber tout mouvement relatif entre elles.

2. Ligature selon la revendication 1, dans laquelle un cordon de soudure de verrouillage relie une pluralité de spires (33).

3. Ligature selon l'une des revendications 1 et 2, dans laquelle un tronçon d'une extrémité d'ancrage du bobinage (31) est fiché dans un trou ménagé dans l'un des deux éléments de membrure (1, 2).

4. Ligature selon l'une des revendications 1 à 3, dans laquelle des tronçons intermédiaires (34) des spires (33), hors de contact avec les éléments de membrure (1, 2), présentent une forme concave.

5. Ligature selon l'une des revendications 1 à 4, constituée à partir de fil (30) à base de fer recuit.

6. Ligature selon la revendication 5, dans laquelle le fil (30) présente un diamètre compris entre 4 et 7 millimètres.

7. Procédé d'établissement d'une ligature entre deux éléments de membrure (1, 2), dans lequel :
on se procure du fil métallique (30),
on bobine le fil (30) sur deux tronçons respectifs, à assembler, des deux éléments de membrure (1, 2), et
on soude au moins une spire (33) d'extrémité du bobinage ainsi obtenu à une autre spire (33).

8. Procédé selon la revendication 7, dans lequel, des tronçons intermédiaires (34) des spires (33) se trouvant hors de contact avec les éléments de membrure (1, 2), on effectue une déformation par écrasement d'au moins une partie centrale (35) de ceux-ci, vers les dits éléments de membrure (1, 2), pour que les tronçons intermédiaires (34) présentent une forme concave, et on effectue un recuit de la dite partie centrale (35).

9. Procédé selon la revendication 8, dans lequel on stabilise la dite déformation par ajout d'un cordon de soudure (40) s'étendant sur la partie centrale (35).

10. Charpente comportant une poutre (1, 8, 11) constituée d'au moins un dit élément de membrure (1, 8) relié, en un point intermédiaire de sa longueur, à un autre élément de membrure (2, 9) par une dite ligature selon l'une des revendications 1 à 6.

## Claims

1. A binding ligature between two rib elements (1, 2) of a constructional framework, comprising a metallic wire (30) wound so as to form a coil whose turns (33) surround two respective sections of the two elements (1, 2), **characterised in that** a turn (33) of at least one end of the coil is welded to another turn (33) to inhibit any relative movement between them.

2. The ligature according to claim 1, wherein a locking welding bead connects a plurality of turns (33).

3. The ligature according to one of claims 1 and 2, wherein a section of one anchoring end of the coil (31) is driven into a hole provided in one of the two rib elements (1, 2).

4. The ligature according to one of claims 1 to 3, wherein intermediate sections (34) of the turns (33), out of contact with the rib elements (1, 2), present a concave shape.

5. The ligature according to one of claims 1 to 4, made from annealed iron-based wire (30).

6. The ligature according to claim 5, wherein the wire (30) present a diameter of between 4 and 7 mm.

7. A method for erecting a ligature between two rib elements (1, 2), comprising:
providing metallic wire (30),
winding the wire (30) on two respective sections, to be assembled, of the two rib elements (1, 2), and
welding at least a turn (33) of the coil end thus obtained to another turn (33).

8. The method of claim 7, wherein, with intermediate sections (34) of the turns (33) located out of contact with the rib elements (1, 2), a deformation is performed by crushing at least a central part (35) thereof, towards said rib elements (1, 2), so that the intermediate sections (34) present a concave shape, and an annealing of the said central part (35) is performed.

9. A method according to claim 8, wherein said deformation is stabilized by addition of a welding bead (40) extending over the central part (35).

10. A framework comprising a beam (1, 8, 11) constituted by at least one said rib element (1, 8) connected, at an intermediate point of its length, to another rib element (2, 9) by a said ligature according to one of claims 1 to 6.

## Patentansprüche

1. Verbindungsverdrahtung zwischen zwei Rippenelementen (1, 2) eines Baurahmens, die einen umwickelten Metalldraht (30) umfasst, um eine Wicklung zu bilden, deren Windungen (33) zwei jeweilige Abschnitte der zwei Elemente (1, 2) umschließen, **dadurch gekennzeichnet, dass** eine Windung (33) mindestens eines Endes der Wicklung an eine andere Windung (33) geschweißt wird, um jegliche relative Bewegung zwischen diesen zu verhindern.

2. Verdrahtung nach Anspruch 1, wobei eine Blockierschweißnaht eine Vielzahl von Windungen (33) verbindet.

3. Verdrahtung nach einem der Ansprüche 1 und 2, wobei ein Abschnitt eines Endes zur Verankerung der Wicklung (31) in ein Loch eingesteckt ist, das in einem der zwei Rippenelemente (1, 2) eingerichtet ist.

4. Verdrahtung nach einem der Ansprüche 1 bis 3, wobei Zwischenabschnitte (34) der Windungen (33), die nicht mit den Rippenelementen (1, 2) in Kontakt stehen, eine konkave Form aufweisen.

5. Verdrahtung nach einem der Ansprüche 1 bis 4, die aus einem Draht (30) auf Basis von geglühtem Eisen besteht.

6. Verdrahtung nach Anspruch 5, wobei der Draht (30) einen Durchmesser zwischen 4 und 7 Millimeter aufweist.

7. Verfahren zur Herstellung einer Verdrahtung zwischen zwei Rippenelementen (1, 2), wobei:
Metalldraht (30) bezogen wird,
der Draht (30) auf zwei jeweilige Abschnitte gewickelt wird, um zwei Rippenelemente (1, 2) zusammenzufügen, und
mindestens eine Windung (33) eines Endes der so erhaltenen Wicklung an eine andere Windung (33) geschweißt wird.

8. Verfahren nach Anspruch 7, wobei Zwischenabschnitte (34) der Windungen (33), die sich nicht in Kontakt mit den Rippenelementen (1, 2) befinden, eine Verformung durch Quetschen mindestens eines Mittelteils (35) dieser gegen die Rippenelemente (1, 2) durchgeführt wird, damit die Zwischenabschnitte (34) eine konkave Form aufweisen, und ein Glühen des Mittelteils (35) durchgeführt wird.

9. Verfahren nach Anspruch 8, wobei die Verformung durch Hinzufügung einer Schweißnaht (40) stabilisiert wird, die sich auf dem Mittelteil (35) erstreckt.

10. Tragwerk, das einen Balken (1, 8, 11) umfasst, der aus mindestens einem besagten Rippenelement (1, 8) besteht, das an einem Zwischenpunkt seiner Länge durch eine besagte Verdrahtung nach einem der Ansprüche 1 bis 6 mit einem anderen Rippenelement (2, 9) verbunden ist.
